# EUROPÄISCHE PATENTSCHRIFT

(11) **EP 0 352 643 B1**
(45) Veröffentlichungstag und Bekanntmachung des Hinweises auf die Patenterteilung: **03.11.1993**
(21) Anmeldenummer: 89113384.5
(22) Anmeldetag: 21.07.1989
(51) Int. Cl.: G01D 18/00, G01D 5/245, G01D 5/34, G01D 3/08

(54) **Lichtelektrische Positionsmesseinrichtung**
Optoelectronic position-measuring device
Dispositif de mesure de position opto-électronique

(30) Priorität: 29.07.1988 DE 3825869
(43) Veröffentlichungstag der Anmeldung: 31.01.1990
(73) Patentinhaber: Dr. Johannes Heidenhain GmbH, D-83292 Traunreut (DE)
(72) Erfinder: Schmitt, Walter, D-8225 Traunreut (DE)

(56) Entgegenhaltungen:
- EP-A- 0 036 976
- DE-A- 2 807 580
- IBM TECHNICAL DISCLOSURE BULLETIN, Bd. 18, Nr. 2, Juli 1975, New York, US, Seiten 304-305; ENGELBRECHT ET AL: "Photocurrent equalization"'

## Beschreibung

Die Erfindung betrifft eine lichtelektrische Positionsmeßeinrichtung gemäß dem Oberbegriff des Anspruches 1.

Derartige lichtelektrische Positionsmeßeinrichtungen in Form vom Längenmeßeinrichtungen oder von Winkelmeßeinrichtungen werden insbesondere bei Bearbeitungsmaschinen zur Messung der Relativlage eines Werkzeugs bezüglich eines zu bearbeitenden Werkstücks sowie bei Koordinatenmeßmaschinen zur Ermittlung von Lage und/oder Abmessungen von Prüfobjekten eingesetzt.

Aus der DE-PS 30 10 611 ist eine lichtelektrische Postionsmeßeinrichtung zur Messung der Relativlage zweier Objekte bekannt, bei der die Teilung eines mit dem einen Objekt verbundenen Teilungsträgers von einer mit dem anderen Objekt verbundenen Abtasteinrichtung abgetastet wird. Die von der Abtasteinrichtung erzeugten periodischen Abtastsignale werden einer Auswerteeinrichtung mit Triggerstufen zur Bildung von Meßwerten für die Relativlage der beiden Objekte zugeführt. Zur Überprüfung der Einstellung der Schwellenspannungen der Triggerstufen wird der Beleuchtungseinheit der Abtasteinrichtung zur Helligkeitsänderung eine Prüfspannung zugeführt. Weiterhin kann bei einer Beleuchtungseinheit mit mehreren lichtemittierenden Dioden, die unterschiedlich altern und daher eine unterschiedliche Helligkeit aufweisen, durch Anlegen der variablen Prüfspannung festgestellt werden, ob die dadurch verminderte Helligkeit der Dioden in einem vorgewählten Sicherheitsbereich noch zum einwandfreien Schalten der Triggerstufen ausreicht, so daß lichtschwache Dioden rechtzeitig ausgewechselt werden können.

In der DE-OS 20 20 393 ist eine lichtelektrische Positonsmeßeinrichtung zu Messung der Relativlage zweier Objekte bekannt, bei der die Teilung eines mit dem einen Objekt verbundenen Teilungsträgers von einer mit dem anderen Objekt verbundenen Abtasteinrichtung abgetastet wird. Die von der Abtasteinrichtung erzeugten periodischen Abtastsignale werden einmal einer Auswerteeinrichtung zur Bildung von Meßwerten für die Relativlage der beiden Objekte und zum anderen einer Fehlermeldeeinrichtung zur Überprüfung des gegenseitigen Phasenwinkels und der Amplitudenhöhen der periodischen Abtastsignale zugeführt. Die Fehlermeldeeinrichtung gibt ein Fehlersignal ab, wenn die Amplitudenhöhen der periodischen Abtastsignale unter die Triggerschwellenspannungen der Triggerstufen absinken, was beispielsweise durch eine alterungsbedingte Helligkeitsabnahme der Beleuchtungseinheit der Abtasteinrichtung, durch partielle Verunreinigungen order durch Beschädigungen der Teilung des Teilungsträgers sowie durch Alterung der die periodischen Abtastsignale liefernden Photoelemente eintreten kann. Bei dieser Meßeinrichtung muß beim Auftreten des Fehlersignals der Fehlermeldeeinrichtung der laufende Meßvorgang - beispielsweise bei der Barbeitung eines Werkstücks auf einer Bearbeitungsmaschine - sofort unterbrochen werden, so daß kostenintensive Fehlzeiten entstehen.

Der Erfindung liegt die Aufgabe zugrunde, bei einer lichtelektrischen Positionsmeßeinrichtung mit einer Fehlermeldeeinrichtung ein rechtzeitiges Erkennen des Bevorstehens eines Fehlersignals zu ermöglichen.

Diese Aufgabe wird erfindungsgemäß durch das kennzeichnende Merkmal des Anspruchs 1 gelöst.

Die mit der Erfindung erzielten Vorteile bestehen insbesondere darin, daß durch die vorgeschlagene Maßnahme mit einfachen Mitteln bei einer Positionsmeßeinrichtung alterungs- und verschmutzungsbedingte Störungen rechtzeitig vor ihrem Auftreten erkannt werden können, so daß diese Störungen nicht während laufender Meß- und Bearbeitungsvorgänge auftreten können, die kostenintensive Fehlzeiten zur Folge hätten.

Vorteilhafte Ausbildungen der Erfindung entnimmt man den Unteransprüchen.

Ausführungsbeispiele der Erfindung werden anhand der Zeichnung näher erläutert.

Es zeigen
- Figur 1: schematisch eine lichtelektrische Positionsmeßeinrichtung mit einer Fehlermeldeeinrichtung;
- Figur 2: ein Helligkeits-Spannungsdiagramm für eine Glühlampe;
- Figur 3: ein Helligkeits-Spannungsdiagramm für eine lichtemittierende Diode;
- Figur 4: eine lichtemittierende Diode mit einer zusätzlichen Spannungsschalteinheit.

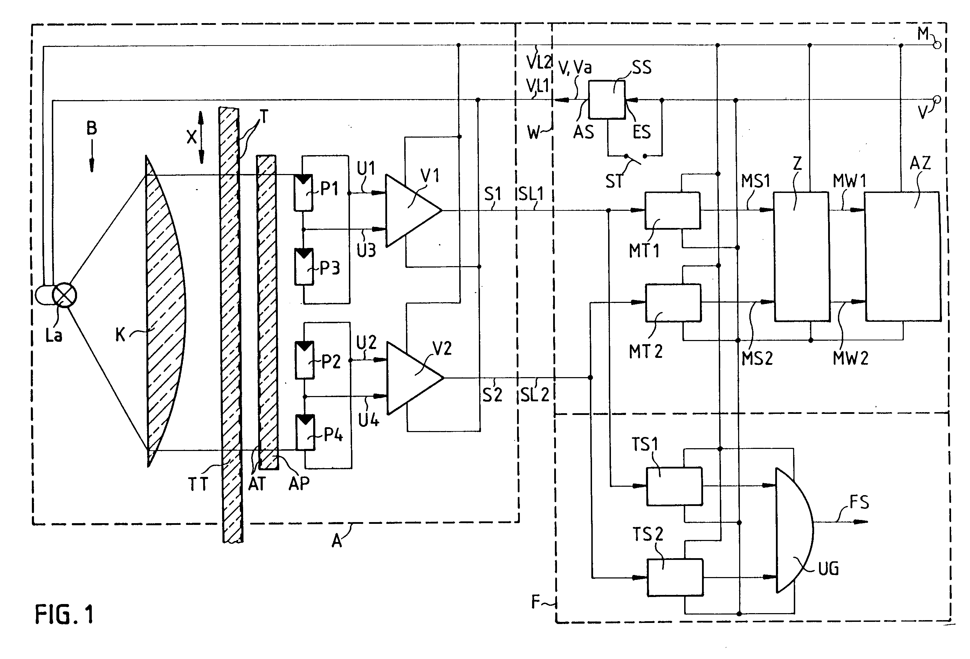

In Figur 1 ist schematisch eine lichtelektrische Positionsmeßeinrichtung zum Messen der Relativlage zweier nicht gezeigter Objekte dargestellt. Die inkrementale Teilung T eines mit dem einen Objekt verbundenen Teilungsträgers TT wird von einer mit dem anderen Objekt verbundenen Abtasteinrichtung A abgetastet, die eine Beleuchtungseinheit B mit einer Lichtquelle La und einem Kondensor K, eine Abtastplatte AP mit einer Abtastteilung AT, vier Photoelemente P1 - P4 sowie zwei Verstärker V1, V2 aufweist. Die Abtastteilung AT weist vier in Meßrichtung X gegeneinander versetzte Abtastfelder auf, deren Teilungsperioden mit der Teilungsperiode der inkrementalen Teilung T übereinstimmen.

Der Lichtstrom der Lichtquelle La durchsetzt den Kondensor K, die Teilung T des Teilungsträgers TT sowie die vier Abtastfelder der Abtastteilung AT der Abtastplatte AP und fällt auf die vier Photoelement P1 - P4, die jeweils einem der vier Abtastfelder der Abtastteilung AT zugeordnet sind. Bei der Meßbewegung der Abtasteinrichtung A relativ zum Teilungsträger TT in Meßrichtung X erzeugen die vier Photoelemente P1 - P4 vier periodische Abtastsignale U1 - U4, die einen gegenseitigen Phasenversatz von 90° aufweisen. Die beiden periodischen Abtastsignale U1, U3 mit einem gegenseitigen Phasenversatz von 180° werden dem ersten Verstärker V1 zur Erzeugung eines ersten nullsymmetrischen periodischen Abtastsignals S1 und die beiden periodischen Abtastsignale U2, U4 mit einem gegenseitigen Phasenversatz von 180° dem zweiten Verstärker V2 zur Erzeugung eines zweiten nullsymmetrischen periodischen Abtastsignals S2 zugeführt; zwischen den beiden nullsymmetrischen periodischen Abtastsignalen S1, S2 besteht ein Phasenversatz von 90°, aus dem die Meßrichtung +X, -X bei der Meßbewegung erkannt werden kann.

Die beiden nullsymmetrischen periodischen Abtastsignale S1, S2 werden über zwei Signalleitungen SL1, SL2 einmal einer Auswerteinrichtung W zugeführt, die zwei Meßtrigger MT1, MT2, einen Zähler Z mit einem Richtungsdiskriminator sowie eine Anzeigeeinheit AZ aufweist. Die beiden nullsymmetrischen periodischen Abtastsignale S1, S2 werden mittels der beiden Meßtrigger MT1, MT2 in zwei binäre Meßsignale MS1, MS2 umgeformt und dem Vorwärts-/Rückwärtszähler Z zum vorzeichenrichtigen Zählen der Inkremente der Teilung T des Teilungsträgers TT bei der Abtastung durch die Abtasteinrichtung A zugeführt. Die Zählergebnisse durch den Vorwärts-/Rückwärtszähler Z stellen die Meßwerte MW1, MW2 für die Relativlage der beiden zueinander verschiebbaren Objekte dar, die in der Anzeigeinheit AZ in digitaler Form angezeigt werden. Die beiden Objekte können durch einen Schlitten und das Bett einer Bearbeitungsmaschine gebildet sein.

Die beiden nullsymmetrischen periodischen Abtastsignale S1, S2 werden zum anderen einer Fehlermeldeeinrichtung F zugeführt, die zwei parallele Triggerstufen TS1, TS2 in Form sogenannter Fenstertrigger aufweist, die jeweils eine gleiche obere Triggerschwelle und eine gleiche untere Triggerschwelle aufweisen. Die beiden nullsymmetrischen periodischen Abtastsignale S1, S2 beaufschlagen jeweils eine der beiden Triggerstufen TS1, TS2, denen ein Undgatter UG nachgeschaltet ist. Am Ausgang dieses Undgatters UG steht eine Fehlersignal FS an, wenn die Amplitudenhöhen einer oder beider periodischer Abtastsignale S1, S2 unter die Triggerschwellenspannungen der beiden Triggerstufen TS1, TS2 absinken oder wenn eine fehlerhafte Phasendiffernz zwischen den beiden nullsymmetrischen periodischen Abtastsignalen S1, S2 auftrifft.

Zur Bildung der beiden binären Meßsignale MS1, MS2 in Form von periodischen Rechtecksignalen werden die beiden nullsymmetrischen periodischen analogen Abtastsignale S1, S2 in ihren Nulldurchgängen mittels der beiden Meßtrigger MT1, MT2 getriggert. Für eine derartige einwandfreie Triggerung der periodischen Abtastsignale S1, S2 und damit für einwandfreie Meßwerte MW1, MW2 sind ausreichend große Amplitudenhöhen der beiden nullsymmetrischen periodischen Abtastsignale S1, S2 erforderlich. Die für eine einwandfreie Messung noch zulässigen minimalen Amplitudenhöhen der beiden nullsymmetrischen periodischen Abtastsignale S1, S2 werden mittels der oberen Triggerschwellenspannung und der unteren Triggerschwellenspannung der beiden Triggerstufen TS1, TS2 der Fehlermeldeeinrichtung F überprüft. Unterschreiten eine oder beide Amplitudenhöhen der beiden periodischen Abtastsignale S1, S2 betragsmäßig die beiden Triggerschwellenspannungen der beiden Triggerstufen TS1, TS2, so erscheint am Ausgang der Fehlermeldeeinrichtung F das Fehlersignal FS.

Eine solche Verminderung der Amplitudenhöhen der beiden periodischen Abtastsignale S1, S2 erfolgt in der Regel durch eine alterungsbedingte Helligkeitsabnahme der Beleuchtungseinheit B, beispielsweise in Form einer oder mehrerer Leuchtdioden oder Lampen, durch Verunreinigungen oder Beschädigungen der Teilung T des Teilungsträgers TT oder der Abtastteilung AT der Abtastplatte AP sowie durch Alterung der Photoelement P1 - P4 im Laufe der Zeit. Der Zeitpunkt des Auftretens dieses Fehlersignals FS infolge zu geringer Amplitudenhöhen der periodischen Abtastsignale S1, S2 ist somit unbestimmt und kann insbesondere bei einer laufenden Messung, beispielsweise bei der Bearbeitung eines Werkstükkes auf einer Bearbeitungsmaschine, durch die sofort notwendige Unterbrechung des Bearbeitungsvorgangs und durch die erfoderliche Wiederinstandsetzung zu kostenintensiven Fehlzeiten führen.

In der Auswerteeinrichtung W wind Versorgungsspannungen V, M (M=Masse) für die Meßtrigger MT1, MT2, den Zähler Z, die Anzeigeeinheit AZ sowie für die Triggerstufen TS1, TS2 und das Undgatter UG der Fehlermeldeeinrichtung F vorgesehen. Diese Versorgungsspannungen V, M werden über Versorgungsleitungen VL1, VL2 gleichfalls der Lichtquelle La und den beiden Verstärkern V1, V2 der Abtasteinrichtung A zugeführt.

Erfindungsgemäß wird zur Überprüfung der Amplitudenhöhen der beiden nullsymmetrischen periodischen Abtastsignale S1, S2 die normale Versorgungsspannung V für die Abtasteinrichtung A für eine bestimmte Prüfzeit T verändert, indem beispielsweise die normale Versorgungsspannung V=5Volt auf eine reduzierte Versorgungsspannung Va=4Volt abgesenkt wird. Zu diesem Zweck ist in der Auswerteeinrichtung W eine Spannungsschalteinheit SS vorgesehen, die über einen Schalter ST mit der normalen Versorgungsspannung V verbunden ist. Am Eingang ES der Spannungsschalteinheit SS liegt ständig die normale Versorgungsspannung V=5Volt an, die bei geöffnetem Schalter ST auch am Ausgang AS der Schaltspannungseinheit SS ansteht; bei geschlossenem Schalter ST steht am Ausgang AS der Spannungsschalteinheit SS die reduzierte Versorgungsspannung Va=Volt an.

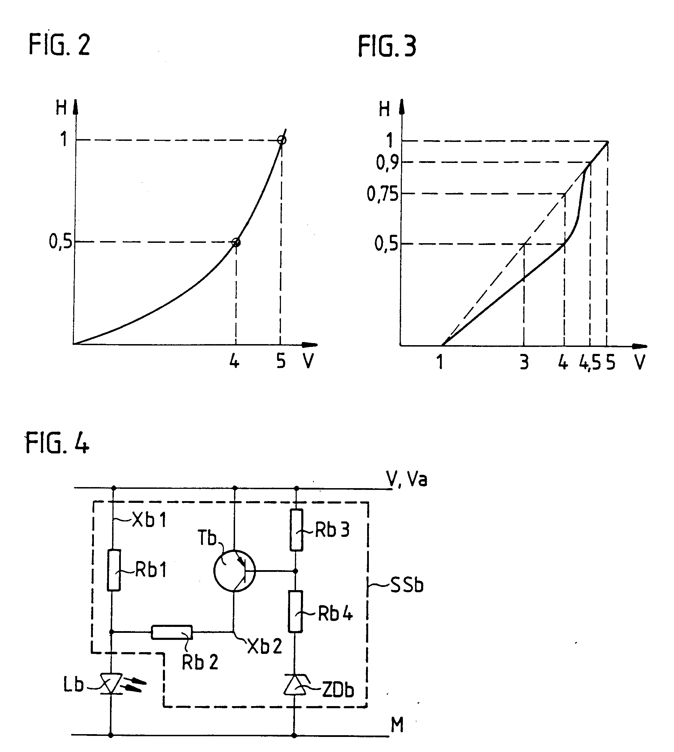

Nach Figur 2 besitzt die Lichtquelle La in Form einer Glühlampe im Neuzustand bei der normalen Versorgungsspannung V=5Volt den relativen Helligkeitsgrad H=1 und bei der reduzierten Versorgungsspannung Va=4Volt den relativen Helligkeitsgrad H=0,5. Im Neuzustand der Positionsmeßeinrichtung wird durch Schließen des Schalters ST für die Prüfzeit T die normale Versorgungsspannung V=5Volt für die Lichtquelle La auf die reduzierte Versorgungsspannung Va=4Volt abgesenkt, so daß sich der relative Helligkeitsgrad H=1 der Lichtquelle La auf den relativen Helligkeitsgrad Ha=0,5 vermindert und dadurch auch die Amplitudenhöhen der periodischen Abtastsignale S1, S2 reduziert werden. Diese reduzierten Amplitudenhöhen der periodischen Abtastsignale S1, S2 werden durch nicht gezeigte Mittel so eingestellt, daß während der Prüfzeit T die Fehlermeldeeinrichtung F kein Fehlersignal FS ausgibt, da die reduzierten Amplitudenhöhen der beiden periodischen Abtastsignale S1, S2 während der Prüfzeit T betragsmäßig über der oberen Triggerschwellenspannung und der unteren Triggerschwellenspannung der beiden Triggerstufen liegen und somit eine einwandfreie Triggerung der beiden periodischen Abtastsignale S1, S2 durch die beiden Meßtrigger MT1, MT2 gewährleistet ist. Die beiden Verstärker V1, V2 der Abtasteinrichtung A werden durch die reduzierte Versorgungsspannung Va=4Volt in ihrer Arbeitsweise nicht beeinträchtigt und die Elemente der Auswerteeinrichtung W und der Fehlermeldeeinrichtung F werden ohnehin ausschließlich von der normalen Versorgungsspannung V=5Volt beaufschlagt.

Im Laufe der Zeit werden die Amplitudenhöhen der beiden periodischen Abtastsignale S1, S2 durch Alterung der Photoelemente P1 - P4 und zusätzlich durch eine alterungsbedingte Helligkeitsabnahme der Lichtquelle La sowie durch Verunreinigungen oder Beschädigungen der Teilung T des Teilungsträgers TT und der Abtastteilung AT der Abtastplatte AP allmählich abzunehmen, so daß zu einem nicht vorhersehbaren Zeitpunkt die Fehlermeldeeinrichtung F ein Fehlersignal FS abgibt, weil wenigstens eine der Amplitudenhöhen der beiden periodischen Abtastsignale S1, S2 unter die Triggerschwellenspannungen der beiden Triggerstufen TS1, TS2 abgesunken sind, so daß eine einwandfreie Triggerung der beiden periodischen Abtastsignale S1, S2 durch die beiden Meßtrigger MT1, MT2 zur Gewinnung der Meßwerte MW1, MW2 unmöglich gemacht wird. Da dieses Auftreten des Fehlersignals FS im allgemeinen während des Betriebes der Positionsmeßeinrichtung , also während eines Meßvorganges, beispielsweise bei der Bearbeitung eines Werkstücks auf einer Bearbeitungsmaschine, erfolgen wird, muß der Meßvorgang und damit die Bearbeitung zur Vermeidung von Fehlmessungen sofort unterbrochen werden, so daß kostenintensive Fehlzeiten durch die erforderliche Behebung der Fehlerquelle während der eigentlichen Bearbeitungszeit auftreten.

Zur Vermeidung derartiger Fehlzeiten wird in bestimmten Zeitabständen, vorzugsweise vor dem Beginn eines Meß- und Beareitungsvorganges, durch Schließen des Schalters ST für die bestimmte Prüfzeit T die Abtasteinrichtung A von der Spannungsschalteinheit SS mit der reduzierten Versorgungsspannung Va=4Volt beaufschlagt, so daß der Helligkeitsgrad der Lichtquelle La vermindert und dadurch die Amplitudenhöhen der beiden periodischen Abtastsignale S1, S2 reduziert werden. Erzeugt die Fehlermeldeeinrichtung F während dieser Prüfzeit T kein Fehlersignal FS, so ist die Positionsmeßeinrichtung in ordnungsgemäßem Zustand, da die beiden periodischen Abtastsignale S1, S2 ausreichende Amplitudenhöhen für eine einwandfreie Messung besitzen. Wird jedoch während dieser Prüfzeit T von der Fehlermeldeeinrichtung F ein Fehlersignal FS ausgegeben, so sind die Amplitudenhöhen der beiden periodischen Abtastsignale S1, S2 für eine oder mehrere nachfolgende Messungen noch ausreichend, so daß der Bearbeitungsbetrieb noch ungestört weitergehen kann. Dieses Fehlersignal FS während der Prüfzeit T stellt jedoch eine Warnung dar, die Ursachen der bevorstehenden zu geringen Amplitudenhöhen der beiden periodischen Abtastsignale S1, S2 bei nächster Gelegenheit, wenn kein Bearbeitungsvorgang stattfindet, zu beheben. d.h. alternde Bauteile in Form der Glühlampe La oder der Photoelemente P1 - P4 auszutauschen oder Verunreinigungen oder Beschädigungen der Teilung T des Teilungsträgers TT und der Abtastteilung AT der Abtastplatte AP zu beseitigen. Durch das Verändern der normalen Versorgungsspannung V wird somit ein Betriebszustand erzeugt, der einer stärkeren Alterung von Bauteilen mit begrenzter Lebensdauer entspricht, so daß auf eine fällige Instandsetzung der Positionsmeßeinrichtung vor deren Ausfall durch das Ende der Lebensdauer dieser Bauteile rechtzeitig hingewiesen wird.

Die Lichtquelle La in Form einer Glühlampe nach Figur 1 kann gemäß Figur 4 durch eine Lichtquelle Lb in Form einer lichtemittierenden Diode ersetzt werden, die gegenüber der Glühlampe La eine andere Helligkeitscharakteristik aufweist, die in Figur 3 gestrichelt dargestellt ist. Diese lichtemittierende Diode Lb besitzt im Neuzustand bei der normalen Versorgungsspannung V=5Volt den relativen Helligkeitsgrad H=1 und bei der reduzierten Versorgungsspannung Va=4Volt den relativen Helligkeitsgrad Ha=0,75; der erforderliche relative Helligkeitsgrad Ha=0,5 nach Figur 2 wird erst bei einer reduzierten Versorgungsspannung Va=3Volt erreicht; bei dieser reduzierten Versorgungsspannung Va=3Volt ist jedoch eine einwandfreie Arbeitsweise der beiden Verstärker V1, V2 nicht mehr gewährleistet.

Die Lichtquelle Lb in Form der lichtemittierenden Diode ist daher gemäß Figur 4 anodenseitig über eine zusätzliche Spannungsschalteinheit SSb mit der Versorgungsspannung V und der reduzierten Versorgungsspannung Va und kathodenseitig mit Masse M verbunden. Diese zusätzliche Spannungsschalteinheit SSb weist zur Stromversorgung der Lichtquelle Lb einen ersten Strompfad Xb1 aus einem ersten Widerstand Rb1 und einen parallelen zweiten Strompfad Xb2 aus einem Schalttransistor Tb und aus einem in Reihe liegenden zweiten Widerstand Rb2 auf; die Basis des Schalttransistors Tb ist mit dem Verbindungspunkt eines dritten Widerstandes Rb3 und eines vierten Widerstandes Rb4 verbunden, die mit einer Zenerdiode ZDb in Reihe zwischen den Versorgungsspannungen V, Va und Masse M geschaltet sind. Die vier Widerstände Rb1 - Rb4 sowie die Zenerdiode ZDb sind so dimensioniert, daß bei der normalen Versorgungsspannung V=5Volt beide Strompfade Xb1, Xb2 leitend sind, so daß die Lichtquelle Lb den relativen Helligkeitsgrad H=1 aufweist. Bei der Absenkung der normalen Versorgungsspannung V=5Volt auf die reduzierte Versorgungsspannung Va=4Volt für die Prüfzeit T fällt die relative Helligkeit H vom Wert 1 bis zum wert 0,9 auf der gestrichelten Linie und weiter auf der durchgezogenen Linie bis zum erforderlichen Wert 0,5 ab, der der reduzierten Versorgungsspannung Va=4Volt entspricht; der Übergang von der gestrichelten Linie zur durchgezogenen Linie etwa bei der Versorgungsspannung V=4,5 (H = 0,9) erfolgt durch das Abschalten des Schalttransistors Tb des zweiten Strompfades Xb2. Die Zenerdiode ZDb definiert die genaue Schaltschwelle für den Schalttransistor Tb.

Der Schalter ST für die Spannungsschalteinheit SS kann manuell oder automatisch durch eine der Auswerteeinrichtung W nachgeschaltete Steuerung, beispielsweise der Bearbeitungsmaschine, betätigt werden. Anstelle des Schalters ST kann die Spannungsschalteinheit SS auch direkt von einem Prüfsignal oder von einem Steuersignal der Steuerung in bestimmten Zeitabständen selbsttätig beaufschlagt werden.

In nicht gezeigter Weise kann anstelle der Spannungsschalteinheit SS in der Abtasteinrichtung A ein Kondensator zwischen der normalen Versorgungsspannung V und der Masse M geschaltet sein. Bei einer Absenkung der normalen Versorgungsspannung V auf den Wert Null (Ausschalten der normalen Versorgungsspannung V) während einer bestimmten Prüfzeit T sinkt der Helligkeitswert der Lichtquelle La, Lb wegen des Kondensators allmählich bis auf den halben Wert ab. Wird beim Auftreten eines Fehlersignals FS während der bestimmten Prüfzeit T die Versorgungsspannung sofort wieder auf den normalen Wert zurückgeschaltet, kann der Meßwert MW1, MW2 durch diesen Testbetrieb nicht verlorengehen; es ist also möglich, während eines Meßvorgangs zu testen.

Die Erfindung ist sowohl bei inkrementalen als auch bei absoluten Positionsmeßeinrichtungen mit Erfolg einsetzbar.

## Patentansprüche

1. Lichtelektrische Positionsmeßeinrichtung zum Messen der Relativlage zweier Objekte, bei der die Teilung (T) eines mit dem einen Objekt verbundenen Teilungsträgers (TT) von einer mit dem anderen Objekt verbundenen und von einer Versorgungsspannung beaufschlagten Abtasteinrichtung (A) mit einer Beleuchtungseinheit (La) zur Erzeugung wenigstens eines periodischen Abtastsignals (S1,S2) abgetastet wird, das zum einem einer Auswerteeinrichtung (W) zur Bildung von Meßwerten für die Relativlage der beiden Objekte und zum anderen einer Fehlermeldeeinrichtung (F) zur Erzeugung eines Fehlersignals (FS) bei fehlerhaften Signalparametern des wenigstens einen periodischen Abtastsignals (S1,S2) zugeführt wird, dadurch gekennzeichnet, daß zur Überprüfung der Amplitudenhöhe des wenigstens einen Abtastsignals (S1, S2) die Versorgungsspannung (V) für die Abtasteinrichtung (A) für eine bestimmte Prüfzeit (T) veränderbar ist.

2. Meßeinrichtung nach Anspruch 1, dadurch gekennzeichnet, daß in der Auswerteeinrichtung (W) eine Spannungsschalteinheit (SS) zur Absenkung der normalen Versorgungsspannung (V) auf eine reduzierte Versorgungsspannung (Va) vorgesehen ist.

3. Meßeinrichtung nach Anspruch 2, dadurch gekennzeichnet, daß die Spannungsschalteinheit (SS) von einem Schalter (ST) beaufschlagt ist, der mit der normalen Versorgungsspannung (V) verbunden ist.

4. Meßeinrichtung nach Anspruch 1, dadurch gekennzeichnet, daß zwischen einer Lichtquelle (Lb) der Abtasteinrichtung (A) und de Spannungsschalteinheit (SS) eine zusätzliche Spannungsschalteinheit (SSb) vorgesehen ist.

5. Meßeinrichtung nach Anspruch 4, dadurch gekennzeichnet, daß die zusätzliche Spannungsschalteinheit (SSb) einen ersten Strompfad (Xb1) mit einem ersten Widerstand (Rb1) und einen parallelen zweiten Strompfad (Xb2) mit einem Schalttransistor (Tb) und einem in Reihe liegendem zweiten Widerstand (Rb2) aufweist.

6. Meßeinrichtung nach Anspruch 5, dadurch gekennzeichnet, daß die Basis des Schalttransistors (Tb) an den Verbindungspunkt zweier Widerstände (Rb3, Rb4) angeschlossen ist, die mit einer Zenerdiode (ZDb) in Reihe zwischen die Versorgungsspannungen (V, Va) und Masse (M) geschaltet sind.

7. Meßeinrichtung nach Anspruch 3, dadurch gekennzeichnet, daß der Schalter (ST) manuell oder automatisch betätigt wird.

## Claims

1. Photoelectric position measuring device for measuring the relative position of two objects, in which the graduation (T) of a graduation support (TT) connected to one object is scanned by a scanning device (A) which is connected to the other object and to which is applied a supply voltage, with an illumination unit (LA) for generating at least one periodic scan signal (S1, S2) which is supplied on the one hand to an evaluation device (W) for forming measured values for the relative position of the two objects and on the other hand to an error message device (F) for generating an error signal (FS) in case of erroneous signal parameters of the at least one periodic scan signal (S1, S2), characterised in that for checking the amplitude level of the at least one scan signal (S1, S2), the supply voltage (V) for the scanning device (A) is variable for a given testing time (T).

2. Measuring device according to claim 1, characterised in that in the evaluation device (W) is provided a voltage switching unit (SS) for lowering the normal supply voltage (V) to a reduced supply voltage (Va).

3. Measuring device according to claim 2, characterised in that the voltage switching unit (SS) is acted upon by a switch (ST) which is connected to the normal supply voltage (V).

4. Measuring device according to claim 1, characterised in that between a light source (Lb) of the scanning device (A) and the voltage switching unit (SS) is provided an additional voltage switching unit (SSb).

5. Measuring device according to claim 4, characterized in that the additional voltage switching unit (SSb) comprises a first current path (Xb1) with a first resistor (Rb1) and a parallel second current path (Xb2) with a switching transistor (Tb) and a series-connected second resistor (Rb2).

6. Measuring device according to claim 5, characterised in that the base of the switching transistor (Tb) is connected to the connecting point of two resistors (Rb3, Rb4) which are connected to a Zener diode (ZDb) in series between the supply voltages (V, Va) and earth (M).

7. Measuring device according to claim 3, characterised in that the switch (ST) is operated manually or automatically.

## Revendications

1. Dispositif de mesure photo-électrique pour la mesure de la position relative de deux objets, dans lequel la graduation (T) d'un support de graduation (TT) lié à l'un des objets est lue par un dispositif de lecture (A) lié à l'autre objet, qui est alimenté par une tension d'alimentation et comporte une unité d'éclairage (La), pour produire au moins un signal de lecture (S1, S2) périodique, lequel signal est transmis d'une part à un dispositif d'exploitation (W) pour former des valeurs de mesure de la position relative des deux objets et d'autre part à un dispositif d'indication d'erreur (F) pour générer un signal d'erreur (FS) lorsque le signal de lecture périodique (S1, S2), au nombre d'au moins un, comporte des paramètres erronés, caractérisé par le fait que, pour contrôler la hauteur de l'amplitude du signal de lecture (S1, S2) périodique, au nombre d'au moins un, on peut faire varier pendant un laps de temps de contrôle (T) déterminé la tension d'alimentation (V) de l'unité de lecture (A).

2. Dispositif de mesure selon la revendication 1, caractérisé par le fait qu'il est prévu dans le dispositif d'exploitation (W) un module de commutation de tension (SS) destiné à abaisser la tension normale d'alimentation (V) à une tension d'alimentation (Va) réduite.

3. Dispositif de mesure selon la revendication 2, caractérisé par le fait que le module de commutation de tension (SS) est commandé par un commutateur (ST) qui est connecté à la tension (V) normale d'alimentation.

4. Dispositif de mesure selon la revendication 1, caractérisé par le fait qu'il est prévu, entre une source lumineuse (Lb) de l'unité de lecture (A) et le module de commutation de tension (SS), un module de commutation de tension (SSb) supplémentaire.

5. Dispositif de mesure selon la revendication 4 caractérisé par le fait que le module de commutation de tension (SSb) supplémentaire comporte une première voie de courant (Xb1) avec une première résistance (Rb1) et une deuxième voie de courant (Xb2) parallèle avec un transistor de commutation (Tb) et une deuxième résistance (Rb2) branchée en série.

6. Dispositif de mesure selon la revendication 1, caractérisé par le fait que la base du transistor de commutation (Tb) est connectée au point de liaison de deux résistances (Rb3, Rb4) branchées en série avec une diode Zener (ZDb) entre les tensions d'alimentation (V, Va) et la masse (M).

7. Dispositif de mesure selon la revendication 3, caractérisé par le fait que le commutateur (ST) est actionné de manière manuelle ou automatique.
